# EUROPÄISCHE PATENTSCHRIFT

(11) **EP 1 774 197 B1**
(45) Veröffentlichungstag und Bekanntmachung des Hinweises auf die Patenterteilung: **17.12.2008**
(21) Anmeldenummer: 05759697.5
(22) Anmeldetag: 05.07.2005
(51) Int. Cl.: F16H 1/14, B60K 17/22

(54) **ANTRIEBSANORDNUNG FÜR EIN KRAFTFAHRZEUG, INSBESONDERE EINEN NIEDERFLURBUS**
DRIVE ARRANGEMENT FOR A MOTOR VEHICLE, IN PARTICULAR A LOW PLATFORM BUS
SYSTEME D'ENTRAINEMENT POUR VEHICULE AUTOMOBILE, EN PARTICULIER POUR BUS A PLATEFORME SURBAISSEE

(30) Priorität: 07.08.2004 DE 102004038518
(43) Veröffentlichungstag der Anmeldung: 18.04.2007
(73) Patentinhaber: ZF Friedrichshafen AG, 88038 Friedrichshafen (DE)
(72) Erfinder: ZIRKL, Otwin, 88069 Tettnang (DE)
(86) Internationale Anmeldenummer: PCT/EP2005/007229
(87) Internationale Veröffentlichungsnummer: WO 2006/015670

(56) Entgegenhaltungen:
- DE-A1- 10 042 475
- DE-B- 1 044 485
- DE-U1- 9 102 998

## Beschreibung

Die Erfindung betrifft eine Antriebsanordnung für ein Kraftfahrzeug, insbesondere einen Niederflurbus nach dem Oberbegriff des Patentanspruches 1, bekannt durch die DE 100 42 475 A1.

Durch die gattungsgemäße DE 100 42 475 A1 wurde eine Antriebsanordnung für einen Niederflurbus mit Heckantrieb und quer zur Fahrtrichtung angeordnetem Antriebsmotor bekannt, welcher über einen Winkeltrieb die Hinterachse, eine so genannte Portalachse des Busses, antreibt. Der Winkeltrieb besteht im Wesentlichen aus einer Kegelradstufe mit einem motorseitigen, antreibenden Kegelrad und einem abtreibenden Kegelrad, welches über eine Zwischenwelle mit der Hinterachse getrieblich verbunden ist. Das antreibende, motorseitige Kegelrad ist koaxial zur in Fahrrichtung quer liegenden Motorachse angeordnet und steht in Zahneingriff mit dem abtreibenden Kegelrad, welches auf der Zwischenwelle angeordnet ist. Der Zahneingriff beider Kegelräder ist, in Fahrtrichtung gesehen, vor der quer liegenden Motorachse, d. h. zwischen Motorachse und Portalachse angeordnet. Durch diese Anordnung ergibt sich eine kurze Zwischenwelle und eine Raum sparende Anordnung.

Eine Problem tritt dann auf, wenn eine derartige Antriebsanordnung sowohl für Rechtslenker als auch für Linkslenker eingesetzt werden soll, wobei zwischen Portalachse und im Heck quer angeordneten Motor gegenüber der Zwischenwelle jeweils eine Tür angeordnet ist, welche bei Linklenkern (Rechtsverkehr) auf der rechten Seite und bei Rechtlenkern (Linksverkehr) auf der linken Seite angeordnet ist. Da ein möglichst breiter Durchgang zum Fahrzeugheck sichergestellt werden muß, ist die Anordnung des Tellerrades des Achstriebs auf der Radseite notwendig. Da der Motor für einen Rechtslenkerantrieb um 180 Grad gegenüber dem Linkslenkerantrieb um seine Hochachse gedreht wird, jedoch dieselbe Drehrichtung beibehält, ist eine Drehrichtungsumkehr für den Antrieb der Hinterachse des Busses erforderlich. Bekannt ist, dass man für diesen Zweck eine zusätzliche Stirnradstufe hinter die Kegelradstufe eingebaut hat, was jedoch den Nachteil eines erhöhten Bauraumes, erhöhter Kosten und eines verschlechterten Wirkungsgrades zur Folge hat.

Aus der DE 91 02 998 U1 ist ein Bewegungsmechanismus zur Übertragung von Drehbewegungen in beliebiger Richtung bekannt, bei dem der Achswinkel zwischen Antriebswelle mit Kegelrad und Abtriebswelle mit Kegelrad kleiner, gleich oder größer als 90 Grad ist und dass eine zusätzliche Getriebestufe zwischen Antrieb und Abtrieb geschaltet ist.

Es ist Aufgabe der vorliegenden Erfindung, eine Antriebsanordnung der eingangs genannten Art zu schaffen, welche eine Drehrichtungsumkehr bei geänderter Lage des Antriebsmotors mit einfachen Mitteln, möglichst ohne zusätzlichen Raumaufwand und ohne Verschlechterung des Wirkungsgrades erlaubt.

Diese Aufgabe wird durch die Merkmale des Patentanspruches 1 gelöst. Erfindungsgemäß ist vorgesehen, dass der Zahneingriff der ersten Kegelradstufe, d. h. des antreibenden, motorseitigen Kegelrades und des abtreibenden Kegelrades, in Fahrtrichtung gesehen, hinter der quer liegenden Motorachse angeordnet ist. Durch diese verblüffend einfache Maßnahme wird gegenüber der herkömmlichen Kegelradstufe, einem so genannten Winkeltrieb, bei welchen der Zahneingriff in Fahrtrichtung vor der Motorachse, d. h. zwischen Motorachse und Hinterachse angeordnet ist, eine Drehrichtungsumkehr erreicht. Die mit dem abtreibenden Kegelrad der motorseitigen Kegelradstufe verbundene Zwischenwelle erhält damit eine entgegengesetzte Drehrichtung, d. h. die Hinterachse wird trotz gedrehtem Motor in derselben Richtung angetrieben. Als Vorteile ergeben sich somit eine beträchtliche Bauraumeinsparung durch die nicht mehr benötigte Stimradstufe, eine Wirkungsgradverbesserung und eine Kostenreduzierung. Damit können die Vorteile eines Niederflurbusses mit einer Portalachse und tief liegendem, breiten Personendurchgang sowohl für Linkslenker als auch für Rechtslenker in gleicher Weise genutzt werden.

In vorteilhafter Ausgestaltung der Erfindung ist das abtriebsseitige Kegelrad der ersten Kegelradstufe bzw. des so genannten Winkeltriebes am Stirnende einer Zwischenwelle befestigt, welche stirnseitig am motorseitigen Kegelrad vorbei geführt ist und die Verlängerung der Motorachse schneidet, vorzugsweise unter einem Winkel, der kleiner als 90 Grad ist. Damit ergibt sich eine Raum sparende Bauweise, d. h. ein Winkeltrieb, der praktisch den gleichen bzw. nicht mehr Raum einnimmt als ein Winkeltrieb, bei welchem der Zahneingriff zwischen Motorachse und Hinterachse des Fahrzeuges angeordnet ist.

In weiterer vorteilhafter Ausgestaltung der Erfindung ist die zweite Kegelradstufe seitlich im Bereich der Hinterachse, d. h. der Portalachse des Niederflurbusses angeordnet, so dass sich ein breiter und tief liegender Personendurchgang ergibt.

In weiterer vorteilhafter Ausgestaltung der Erfindung ist der die erste Kegelradstufe umfassende Winkeltrieb konstruktiv aus zwei Gehäuseteilen gebildet, welche jeweils ein Kegelrad aufnehmen und mit einander durch eine Flanschverbindung verbunden sind. Damit wird der Vorteil erreicht, dass ein Gehäuseteil des Winkeltriebes, nämlich das motorseitige Gehäuse und das motorseitige Kegelrad für beide Antriebsversionen, d. h. sowohl für Linkslenker als auch für Rechtslenker verwendet werden können, während lediglich das abtreibende Kegelrad mit seinem Gehäuse ausgetauscht wird. Damit wird der Vorteil einer weiteren Kosteneinsparung erreicht.

Ein Ausführungsbeispiel der Erfindung ist in der Zeichnung dargestellt und wird im Folgenden näher beschreiben.

Es zeigen
- Fig. 1: eine Antriebsanordnung nach dem Stand der Technik für Linkslenker,
- Fig. 2: eine Antriebsanordnung nach dem Stand der Technik für Rechtslenker,
- Fig. 3: eine erfindungsgemäße Antriebsanordnung (schematisch) für Rechtslenker und
- Fig. 4: einen erfindungsgemäßen Winkeltrieb.

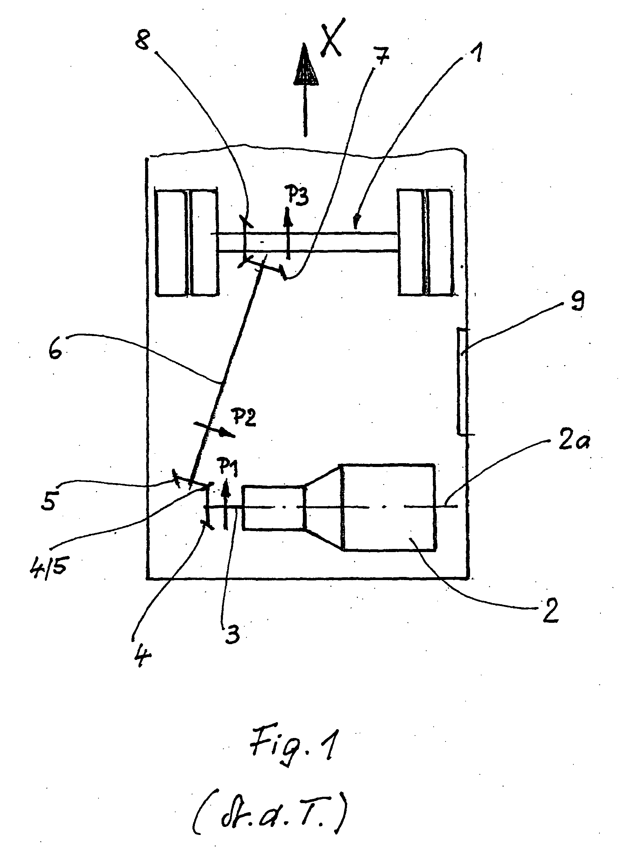

**Fig. 1** zeigt eine bekannte Antriebsanordnung für einen Linkslenker-Niederflurbus, von welchem lediglich eine Hinterachse 1, eine so genannte Portalachse, und ein im Heck angeordneter Antriebsmotor 2 dargestellt sind, wobei der Antriebsmotor 2, in Fahrtrichtung X gesehen, quer und hinter der Portalachse 1 angeordnet ist. Der Antriebsmotor 2 weist somit eine quer liegende Motorachse 2a und eine koaxial angeordnete, links drehende Abtriebswelle 3 auf, auf welcher ein erstes Kegelrad 4 angeordnet ist. Die Drehrichtung der Antriebswelle 3 ist durch einen Pfeil P1 gekennzeichnet. Über einen Zahneingriff 4/5, welcher in Fahrtrichtung vor der Motorachse 2a liegt, steht das Kegelrad 4 mit einem weiteren Kegelrad 5 in Eingriff und treibt eine Zwischenwelle 6 an, welche in Richtung des Pfeils P2 dreht. Über eine weitere Kegelradstufe, nämlich ein am stirnseitigen Ende der Zwischenwelle 6 angeordnetes Kegelrad 7 und ein auf der Portalachse 1 befestigtes und seitlich angeordnetes Tellerrad 8, wird die Hinterachse 1 angetrieben, und zwar in Richtung des Pfeils P3, d. h. in Fahrtrichtung X. Gegenüber dem seitlich angeordneten Tellerrad 8 bzw. der Zwischenwelle 6 ist eine Tür 9 für den Personeneinstieg angeordnet, d. h. auf der rechten Seite des Busses.

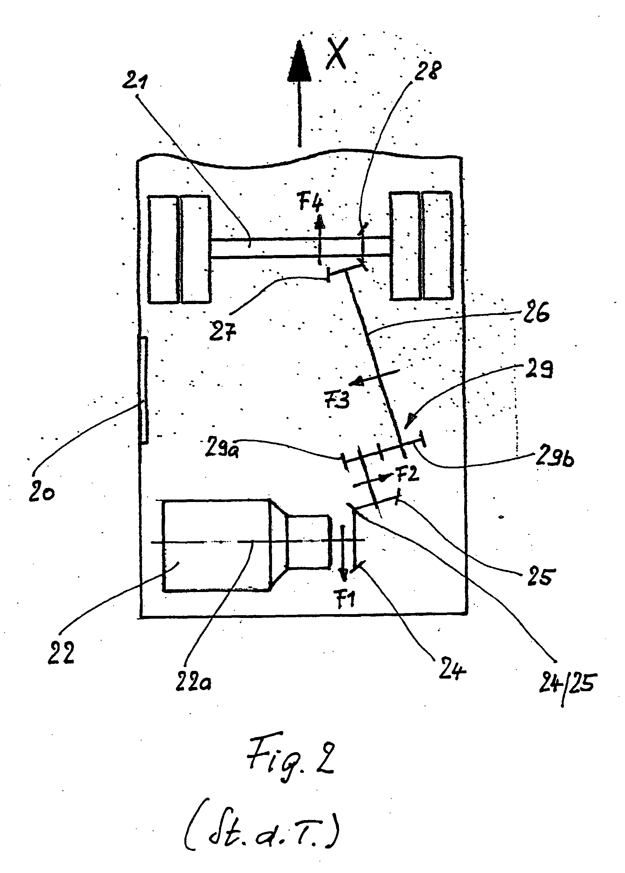

**Fig. 2** zeigt eine weitere Antriebsanordnung nach dem Stand der Technik, und zwar für einen Rechtslenker, wobei wiederum nur der Heckbereich mit einer links angeordneten Tür 20, mit einer Portalachse 21 und einem um 180 Grad um seine Hochachse gedrehten Antriebsmotor 22 mit einer quer zur Fahrtrichtung X angeordneten Motorachse 22a dargestellt ist (gleiche Teile weisen gleiche Endziffern auf). Der Motor 22 hat dieselbe Drehrichtung wie der Motor 2 gemäß Fig. 1, was durch den Pfeil F1 dargestellt ist. Dem Antriebsmotor 22 ist ein Winkeltrieb, bestehend aus den Kegelrädern 24, 25 nachgeschaltet, welche über einen Zahneingriff 24/25 miteinander in Eingriff stehen, welcher, in Fahrtrichtung X gesehen, vor der Motorachse 22a angeordnet ist. Demzufolge ergibt sich für das abtreibende Kegelrad 25 eine Drehrichtung, gekennzeichnet durch den Pfeil F2. Zwischen einer Zwischenwelle 26 und dem Winkeltrieb 24,25 ist eine Stirnradstufe 29, bestehend aus den Stirnrädern 29a, 29b, für eine Drehrichtungsumkehr angeordnet, so dass sich für die Zwischenwelle 26 eine Drehrichtung entsprechend dem Pfeil F3 ergibt. Über die zweite Kegelradstufe, bestehend aus dem Kegelrad 27 und dem Tellerrad 28, wird die Portalachse 21 in Richtung des Pfeils F4, d. h. in Fahrtrichtung X angetrieben.

Man erkennt aus diesen beiden Darstellungen (Fig. 1 und Fig. 2) für bekannte Antriebsvorrichtungen, dass für den Rechtslenker ein erheblicher getrieblicher Mehraufwand erforderlich ist, und zwar im Hinblick auf zusätzlichen Bauraum, zusätzliches Gewicht und zusätzliche Kosten, verbunden mit einem verschlechterten Wirkungsgrad.

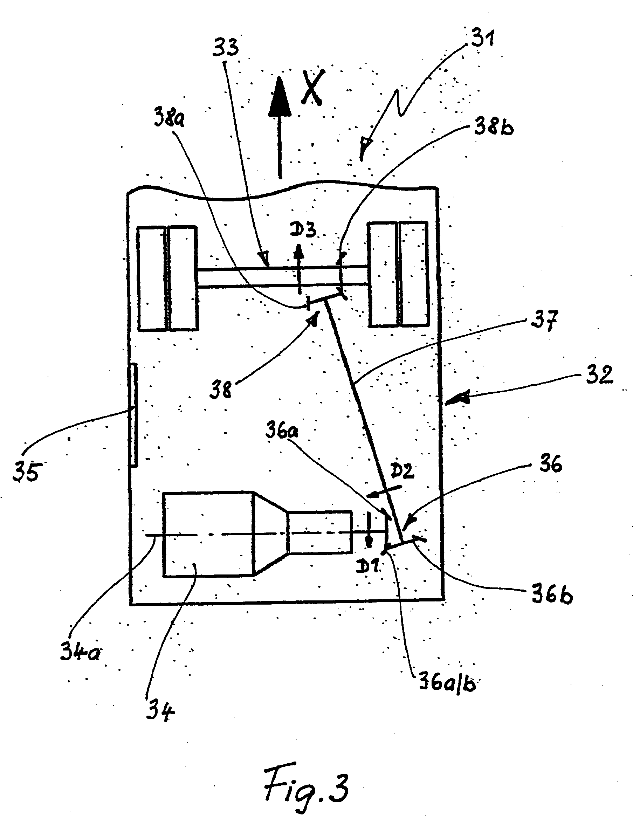

**Fig. 3** zeigt eine erfindungemäße Antriebsanordnung für einen teilweise dargestellten Niederflurbus 31, welcher als Rechtslenker, d. h. für Linksverkehr konzipiert ist. Der Bus 31 bewegt sich in Fahrtrichtung X (vorwärts) und weist einen Heckbereich 32 mit einer als Portalachse ausgebildeten Hinterachse 33 und einem quer angeordneten Antriebsmotor 34 mit einer Motorachse 34a auf. Zwischen der Hinterachse 33 und dem Motor 34 ist auf der linken Seite des Busses eine Tür 35 angeordnet. Der Antriebsmotor 34 ist durch einen Triebstrang, bestehend aus einer motorseitigen ersten Kegelradstufe 36, einer Zwischenwelle 37 und einer zweiten achsseitigen Kegelradstufe 38 mit der Hinterachse 33 verbunden, wobei die Drehrichtungen der Motorwelle 34a durch einen Pfeil D1, der Zwischenwelle 37 durch einen Pfeil D2 und der Hinterachse 33 durch einen Pfeil D3 gekennzeichnet sind. Die erste Kegelradstufe 36 besteht aus einem von der Motor- bzw. Getriebeabtriebswelle 34a angetriebenen Kegelrad 36a, welches mit einem zweiten Kegelrad 36b kämmt. Der Zahneingriff 36a/b ist dabei, in Fahrtrichtung X gesehen, hinter der Motorachse 34a angeordnet. Dadurch kommt es bei einer Linksdrehung des Motors 34 (gemäß Pfeil D1) auch zu einer Linkdrehung der Zwischenwelle 37 gemäß Pfeil D2. Die zweite Kegelradstufe 38 besteht aus einem auf der Zwischenwelle 37 angeordneten Kegelradritzel 38a und einem auf der Hinterachse 33 seitlich befestigten Tellerrad 38b, so dass es zu einer Drehrichtung gemäß Pfeil D3 (in Fahrtrichtung) der Hinterachse 33 kommt. Durch diese Antriebsanordnung mit dem Winkeltrieb 36, der Zwischenwelle 37 und der zweiten seitlich auf der Hinterachse 33 angeordneten Kegelradstufe 38 ist einerseits ein Einstieg 35 auf der gegenüber liegenden, d. h. linken Seite des Busses und andererseits ein relativ breiter und tief liegender Personendurchgang über der Portalachse 33 möglich.

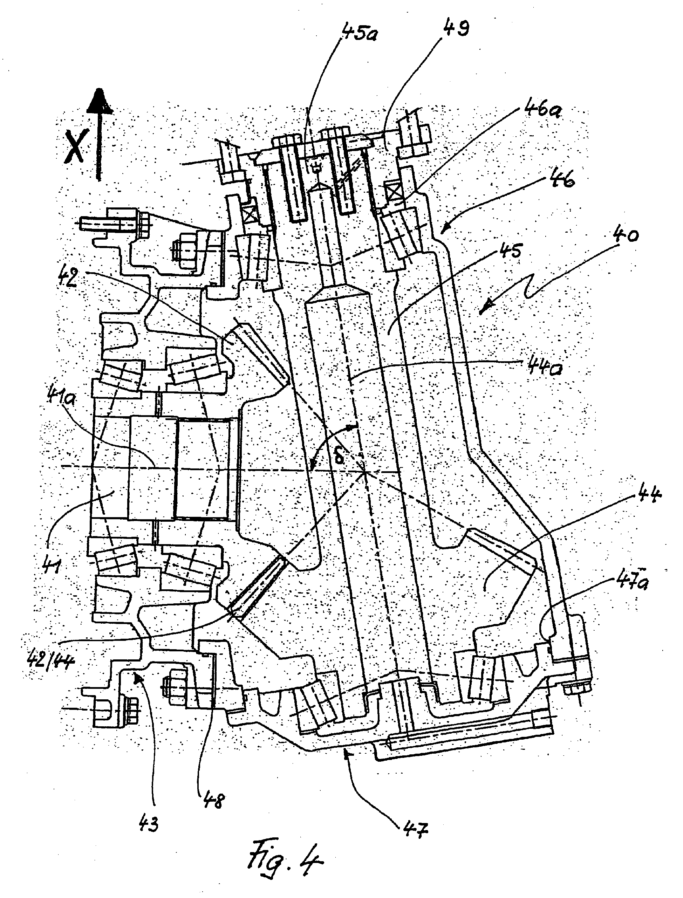

**Fig. 4** zeigt eine konstruktive Ausführung eines erfindungsgemäßen Winkeltriebes 40, welcher der motorseitigen Kegelradstufe 36 in Fig. 3 entspricht. Eine motor- bzw. getriebeseitige Abtriebswelle 41 ist formschlüssig mit einem Kegelradritzel 42 verbunden, welches in einem ersten Gehäuseteil, einem getriebeseitigen Lagerschild 43 gelagert ist. Das Lagerschild 43 ist an einem nicht dargestellten Getriebe befestigt, welches einem nicht dargestellten quer im Fahrzeug eingebauten Antriebsmotor nachgeordnet ist. Die Antriebswelle 41 weist eine Achse 41 a auf, welche quer zur Fahrtrichtung, dargestellt durch einen Pfeil X, angeordnet ist. Mit dem Ritzel 42 kämmt ein zweites Kegelrad 44, welches eine Rotationsachse 44a aufweist, die mit der Antriebsachse 41a einen Winkel δ bildet, welcher kleiner als 90 Grad ist, vorzugsweise etwa 80 Grad beträgt. Das Kegelrad 44 ist einstückig mit einer Hohlwelle 45 ausgebildet, welche beiderseits der Verzahnung in koaxialen Bohrungen 46a, 46b eines zweiten Gehäuseteils 46 gelagert ist, welches durch einen Lagerdeckel 47 verschließbar ist. Das zweite Gehäuseteil 46 ist über eine Flanschverbindung 48 mit dem ersten Gehäuseteil bzw. Lagerschild 43 verbunden. Die Hohlwelle 45 weist auf der dem Lagerdeckel 47 gegenüber liegenden Seite ein massives Wellenende 45a auf, welches mit einer teilweise dargestellten Zwischenwelle 49 (entsprechend der Zwischenwelle 37 in Fig. 3) zum Antrieb der hier nicht dargestellten Hinterachse verbunden ist.

Beide Kegelräder 42, 44 bilden einen Zahneingriff 42/44, welcher, in Fahrtrichtung X gesehen, hinter der Motorachse 41 a angeordnet ist. Gegenüber einer (nicht dargestellten) Anordnung des abtreibendes Kegelrades mit einem Zahneingriff in Fahrtrichtung vor der Motorachse 41 a ergibt sich durch den erfindungsgemäßen Zahneingriff 42/44 eine entgegengesetzte Drehrichtung für die Hohlwelle 45.

Der dargestellte Winkeltrieb 40, der vorzugsweise für ein Rechtslenkerfahrzeug (gemäß Fig. 3) Verwendung findet, kann teilweise auch für einen Linkslenker Anwendung finden, indem das Gehäuseteil 46 mit Kegelrad 44 und Hohlwelle 45 ausgetauscht wird. Das Lagerschild 43 mit dem motorseitigen Kegelradritzel 42 kann dagegen für die Linkslenker-Antriebsanordnung verwendet werden, welche einer Ausführung gemäß Fig. 1 nach dem Stand der Technik entspricht.

### Bezugszeichen

- 1: Hinterachse
- 2: Antriebsmotor
- 2a: Motorachse
- 3: Antriebswelle
- 4: Kegelradritzel
- 4/5: Zahneingriff
- 5: Kegelrad
- 6: Zwischenwelle
- 7: Kegelradritzel
- 8: Tellerrad
- 9: Tür (Personeneinstieg)

- 20: Tür
- 21: Hinterachse
- 22: Antriebsmotor
- 22a: Motorachse
- 24: Kegelradritzel
- 24/25: Zahneingriff
- 25: Kegelrad
- 26: Zwischenwelle
- 27: Kegelradritzel
- 28: Tellerrad
- 29: Stirnradstufe
- 29a: Stirnradritzel
- 29b: Stirnrad

- 31: Niederflurbus
- 32: Heckbereich
- 33: Portalachse
- 34: Antriebsmotor
- 34a: Motorachse
- 35: Tür
- 36: erste Kegelradstufe
- 36a: Kegelradritzel
- 36b: Kegelrad
- 36a/b: Zahneingriff
- 37: Zwischenwelle
- 38: zweite Kegelradstufe
- 38a: Kegelradritzel
- 38b: Tellerrad

- 40: Winkeltriebeinheit
- 41: Antriebswelle
- 41 a: Antriebsachse
- 42: Kegelradritzel
- 43: erstes Gehäuseteil
- 44: Kegelrad
- 42/44: Zahneingriff
- 44a: Kegelradachse
- 45: Hohlwelle
- 45a: Stirnende von Hohlwelle
- 46: zweites Gehäuseteil
- 46a: Gehäusebohrung
- 46b: Gehäusebohrung
- 47: Gehäusedeckel
- 48: Flanschverbindung
- 49: Zwischenwelle

## Patentansprüche

1. Antriebsanordnung für ein Kraftfahrzeug, insbesondere einen Niederflurbus (31) mit einer Hinterachse, insbesondere einer Portalachse (33) und mit einem quer zur Fahrtrichtung (X) eingebauten und im Heck (32) des Kraftfahrzeuges angeordneten Antriebsmotor (34), welcher über eine erste, motorseitige Kegelradstufe (36) und eine zweite, achsseitige Kegelradstufe (38) mit der Hinterachse (33) in getrieblicher Verbindung steht, wobei die motorseitige Kegelradstufe (36) ein antreibendes, koaxial zur quer liegenden Motorachse (34a) angeordnetes Kegelrad (36a) aufweist, welches in Zahneingriff (36a/b) mit einem abtreibenden Kegelrad (36b) besteht, **dadurch gekennzeichnet, dass** der Zahneingriff (36a/b) in Fahrtrichtung (X) hinter der Motorachse (34a) angeordnet ist und die zweite, achsseitige Kegelradstufe (38) ein auf der Hinterachse (33) seitlich angeordnetes Tellerrad (38b) sowie ein am stirnseitigen Ende der Zwischenwelle (37) befestigtes Kegelradritzel (38a) aufweist.

2. Antriebsanordnung nach Anspruch 1, **dadurch gekennzeichnet, dass** das abtreibende Kegelrad (36b, 44) auf einer Zwischenwelle (37, 45, 49) befestigt ist, welche sich mit einer über das antreibende Kegelrad (36a, 42) hinausgehenden Verlängerung der Motorachse (34a, 41 a) schneidet.

3. Antriebsanordnung nach Anspruch 2, **dadurch gekennzeichnet, dass** die Achse (44a) der Zwischenwelle (37, 45, 49) und die Motorachse (34a, 41 a) einen Winkel δ von kleiner als 90 Grad bilden.

4. Antriebsanordnung nach einem der Ansprüche 1 bis 3, **dadurch gekennzeichnet, dass** die motorseitige Kegelradstufe (42, 44) eine Winkeltriebeinheit (40) bildet, welche ein erstes Gehäuseteil (43) zur Lagerung des antreibendes, motorseitigen Kegelrades (42) und ein zweites Gehäuseteil (46) zur Lagerung des abtreibenden Kegelrades (44, 45) aufweist.

5. Antriebsanordnung nach Anspruch 4, **dadurch gekennzeichnet, dass** das zweite Gehäuseteil (46) zwei koaxial angeordnete Bohrungen (46a, 46b) aufweist, wobei die größere Bohrung (46b) durch einen Deckel (47) verschließbar ist.

6. Antriebsanordnung nach Anspruch 4 oder 5, **dadurch gekennzeichnet, dass** das zweite Gehäuseteil (46) mit montiertem Kegelrad (44, 45) an das erste Gehäuseteil (43) mittels einer Flanschverbindung (48) anflanschbar ist.

## Claims

1. Drive layout for a motor vehicle, in particular a low-floor bus (31), with a rear axle, in particular a portal axle (33), and with a transversal rear-mounted (32) driving engine (34), which is drivingly connected with the rear axle (33) via a first engine-based bevel-gear stage (36) and a second axle-based bevel-gear stage (38), with the engine-based bevel-gear stage (36) featuring a driving bevel gear (36a) arranged coaxially with the transverse engine axis (34a) and meshing (36a/b) with a driving bevel gear (36b), **characterized in that** meshing (36 a/b) is arranged in driving direction (X) after the engine axis (34a) and that the second axle-based bevel-gear stage (38) features a ring gear (38b) laterally arranged on the rear axle (33) and a bevel-gear pinion (38a) mounted to the face side of the intermediate shaft (37).

2. Drive layout according to claim 1, **characterized in that** the driving bevel gear (36b, 44) is mounted to an intermediate shaft (37, 45, 49) which intersects with an extension of the engine axis (34a, 41 a) extending beyond the driving bevel gear (36a, 42).

3. Drive layout according to claim 2, **characterized in that** the axis (44a) of the intermediate shaft (37, 45, 49) and the engine axis (34a, 41 a) form an angle δ smaller than 90°.

4. Drive layout according to one of the claims 1 thru 3, **characterized in that** the engine-based bevel-gear stage (42,44) forms an angle-drive unit (40) featuring a first housing part (43) supporting the driving engine-based bevel gear (42) and a second housing part (46) supporting the driving bevel gear (44,45).

5. Drive layout according to claim 4, **characterized in that** the second housing part (46) features two coaxially arranged bores (46a, 46b), with the larger bore (46b) being closeable by a cover.

6. Drive layout according to claim 4 or 5, **characterized in that** the second housing part (46) with the mounted bevel gear (44, 45) can be flanged to the first housing part (43) by means of a flange coupling (48).

## Revendications

1. Chaîne cinématique pour un véhicule automobile, en particulier un autobus à plancher surbaissé (31), doté d'un pont arrière, en particulier un pont portique (33) et d'un moteur d'entraînement (34) installé de façon transversale par rapport à la direction de marche (X) et disposé à l'arrière (32) du véhicule automobile, ce moteur étant en liaison de transmission avec le pont arrière (33) à l'aide d'un premier étage à pignons coniques (36) côté moteur et un deuxième étage à pignons coniques (38) côté pont, sachant que l'étage à pignons coniques côté moteur (36) comporte un pignon conique (36a) menant et disposé coaxialement par rapport à l'essieu moteur (34a) disposé transversalement, ce pignon conique engrenant (36a/b) avec un pignon conique mené (36b), **caractérisée en ce que** l'engrènement (36 a/b) est disposé en direction de marche (X) en aval de l'essieu moteur (34a) et **en ce que** le deuxième étage de pignons coniques côté essieu (38) comporte une couronne (38b) disposée latéralement sur le pont arrière (33) ainsi qu'un pignon conique (38a) fixé à l'extrémité frontale de l'arbre intermédiaire (37).

2. Chaîne cinématique selon la revendication 1, **caractérisée en ce que** le pignon conique mené (36b, 44) est fixé sur un arbre intermédiaire (37, 45, 49), celui-ci se creusant avec une rallonge de l'essieu moteur (34a, 41 a) saillant du pignon conique menant (36a, 42).

3. Chaîne cinématique selon la revendication 2, **caractérisée en ce que** l'essieu (44a) de l'arbre intermédiaire (37, 45, 49) et l'essieu moteur (34a, 41 a) forment un angle δ inférieur à 90°.

4. Chaîne cinématique selon une des revendications 1 à 3, **caractérisée en ce que** l'étage de pignons coniques côté moteur (42,44) forme une unité de renvoi d'angle (40), celle-ci comportant un premier demi-carter (43) pour le logement du pignon conique menant côté moteur (42) et un deuxième demi-carter (46) pour le logement du pignon conique mené (44,45).

5. Chaîne cinématique selon la revendication 4, **caractérisée en ce que** le deuxième demi-carter (46) comporte deux alésages disposés coaxialement (46a, 46b), sachant que l'alésage plus grand (46b) peut être fermé par un couvercle.

6. Chaîne cinématique selon les revendications 4 ou 5, **caractérisée en ce que** le deuxième demi-carter (46) peut être bridé, avec pignon conique monté (44, 45) et à l'aide d'un raccord à bride (48), au premier demi-carter (43).
